# FASCICULE DE BREVET EUROPEEN

(11) **EP 0 997 854 B1**
(45) Date de publication et mention de la délivrance du brevet: **18.12.2002**
(21) Numéro de dépôt: 99402688.8
(22) Date de dépôt: 28.10.1999
(51) Int. Cl.: G07F 7/10

(54) **Dispositif pour la gestion d'accès dans une carte à circuit intégré**
Vorrichtung zur Zugriffsverwaltung in einer IC Karte
Device for controlling the access in an IC card

(30) Priorité: 30.10.1998 FR 9813704
(43) Date de publication de la demande: 03.05.2000
(73) Titulaire: SCHLUMBERGER Systèmes, 92120 Montrouge (FR)
(72) Inventeur: Alyari, Marc, 92140 Clamart (FR)

(56) Documents cités:
- EP-A- 0 332 117
- EP-A- 0 949 595
- US-A- 5 473 690
- US-A- 5 729 717
- US-A- 5 963 980

## Description

La présente invention concerne un dispositif à circuit intégré contenant, d'une part, une zone mémoire qui comprend N fichiers Fi (i = 1,..., N) contenant chacun une zone d'information Zi, et, d'autre part, x applications Aj (j = 1, ..., x).

Un tel dispositif à circuit intégré est le plus souvent utilisé pour des applications dans lesquelles la sécurité du traitement d'informations est essentielle. Il s'agit par exemple de cartes à circuit intégré comportant des applications concernant le domaine de la santé, de la téléphonie mobile, ou encore, des applications relatives au domaine bancaire.

Il existe des cartes dites mono-application et multi-applications.

Dans une carte mono-application contenant une application Aj, en vue d'accéder aux informations contenues dans un fichier Fi de ladite application il faut vérifier un ensemble de conditions d'accès autorisant l'utilisation de fonctions telles que des fonctions de lecture, d'écriture ou de sélection. Ainsi, par exemple, pour pouvoir accéder à ladite application et faire une lecture des informations dudit fichier Fi, on doit vérifier les conditions d'accès correspondant, d'une part, à un code confidentiel utilisateur couramment appelé CHV ou PIN1, et, d'autre part, à une authentification de ladite carte vis à vis d'un réseau de communication en présentant une clef. Dans le langage courant, on dit que l'on vérifie les conditions d'accès CHV1/AUTO. Ensuite, si on veut modifier ou ajouter une donnée dans ledit fichier Fi de ladite application, il faut par exemple vérifier la condition d'accès AUT1. Comme on peut le voir, à chaque fonction ou groupe de fonctions, on associe une configuration de conditions d'accès à des informations dudit fichier Fi.

Il en est de même dans les cartes multi-applications. Dans ce type de cartes, les différentes applications Aj sont indépendantes les unes des autres et la sécurité des informations est très importante, c'est pour cette raison que l'on différencie l'accès aux différentes applications. Ainsi, par exemple, pour une première application A1, on vérifie les conditions d'accès CHV1/AUTO, tandis que pour une autre application A2, on vérifie les conditions d'accès CHV2/AUTO. Puis pour mettre à jour des données dans A1, on vérifie la condition d'accès AUT1 tandis que pour A2, on vérifie par exemple la condition d'accès AUT2. Comme on peut le voir, plus il y aura d'applications dans une carte, plus il faudra avoir un grand nombre de configurations possibles de conditions d'accès et d'associations avec différents groupes de fonctions possibles.

On connaît de l'état de la technique, et notamment constitué de la norme TE9 EN 726-3, des cartes ne présentant que neuf configurations possibles de conditions d'accès et que six groupes de fonctions possibles pour un type de fichier donné Fi (fichier répertoire, fichier élémentaire ou fichier clef).

Dans les cartes multi-applications connues de l'état de la technique se pose le problème du partage d'informations entre différentes applications Aj. En effet, bien que lesdites applications soient indépendantes les unes des autres, elles ont toutefois besoin de partager certaines informations. Ainsi, par exemple, si une carte comporte une application dans le domaine de la téléphonie mobile et une autre application dans le domaine bancaire, et si les unités téléphoniques consommées sont facturées sur le même compte bancaire que celui des divers achats effectués avec ladite carte, les deux applications vont devoir partager une même information qui est celle du numéro de compte à débiter.

Aussi, un problème technique à résoudre par l'objet de la présente invention est de proposer un dispositif à circuit intégré contenant, d'une part, une zone mémoire qui comprend N fichiers Fi (i = 1,..., N) contenant chacun une zone d'information Zi, et, d'autre part, x applications Aj (j = 1, ..., x), dispositif qui permettrait, de donner une plus grande gamme de configurations de conditions d'accès à des informations desdits fichiers Fi ainsi qu'un plus grand choix de groupes de fonctions, et, de gérer un partage d'informations entre différentes applications et ce de façon sécuritaire.

Une solution au problème technique posé consiste, selon la présente invention, en ce que ladite zone d'information de chaque fichier Fi contient M régions Rk (k = 1,..., M) comprenant des configurations de conditions d'accès à des informations dudit fichier Fi, lesdites configurations étant associées respectivement à M groupes de fonctions Gk, chaque région Rk contenant en outre une information Ik1 correspondant à un nombre y d'applications Al (l = 1,..., y) pouvant utiliser un groupe de fonctions Gk en vue d'accéder à des informations dudit fichier Fi.

Ainsi, comme on le verra en détail plus loin, le dispositif de l'invention permet un partage d'informations entre de multiples applications Al en autorisant l'utilisation d'un ou plusieurs mêmes groupes de fonctions Gk par lesdites applications Al, lesdits groupes de fonctions exploitant des informations contenues dans lesdits fichiers Fi. De plus, comme on le verra aussi par la suite, le fait de pouvoir obtenir de multiples configurations de conditions d'accès et de pouvoir les associer à n'importe quel groupe de fonctions va permettre d'améliorer la sécurité des informations.

La description qui va suivre au regard des dessins annexés, donnés à titre d'exemples non limitatifs, fera bien comprendre en quoi consiste l'invention et comment elle peut être réalisée.

La figure 1 est un schéma d'un dispositif à circuit intégré, une carte à circuit intégré par exemple.

La figure 2 est un schéma montrant une répartition de fichiers et d'applications dans la carte de la figure 1.

La figure 3 est un schéma montrant une autre répartition de fichiers et d'applications dans la carte de la figure 1.

La figure 4 est un schéma d'une zone d'information contenue dans un fichier de la carte de la figure 1.

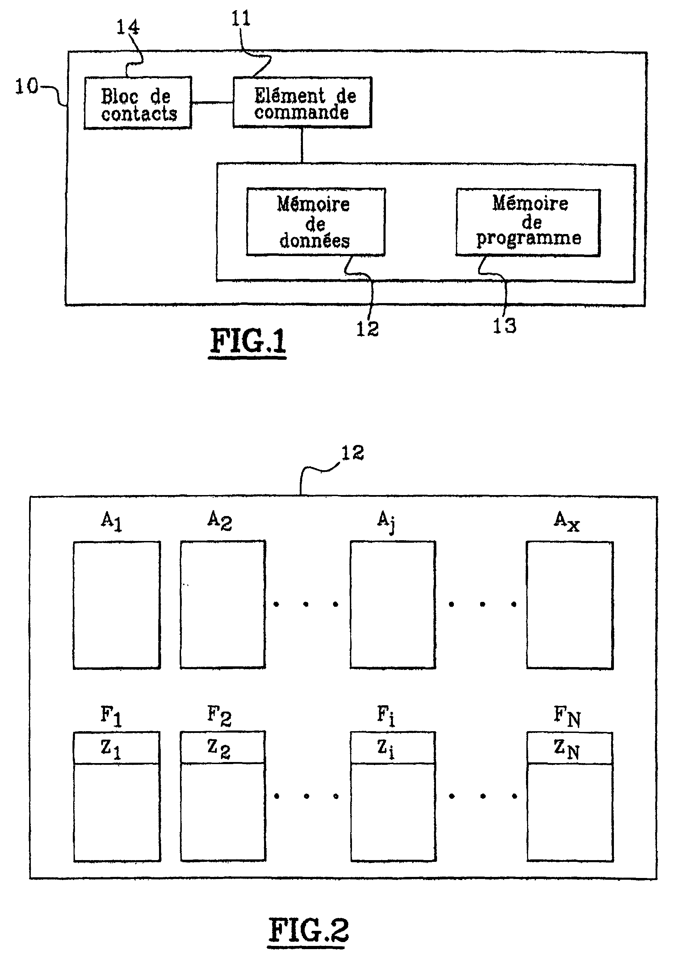

Sur la figure 1 est représenté un dispositif 10 à circuit intégré par exemple une carte à circuit intégré.

Cette carte 10 contient un élément 11 de commande (par exemple une unité centrale de traitement ou CPU), une mémoire 12 de données et une mémoire 13 de programme, et un bloc 14 de contacts destiné à une connexion électrique avec par exemple un connecteur d'un lecteur de cartes.

Ladite mémoire 12 de données est représentée sur la figure 2. Dans cet exemple, la mémoire 12 contient, d'une part, N fichiers Fi (i = 1, ..., N) comportant chacun une zone d'information Zi, et, d'autre part, x applications Aj (j = 1, ..., x), aucune desdites applications ne contenant de fichiers Fi.

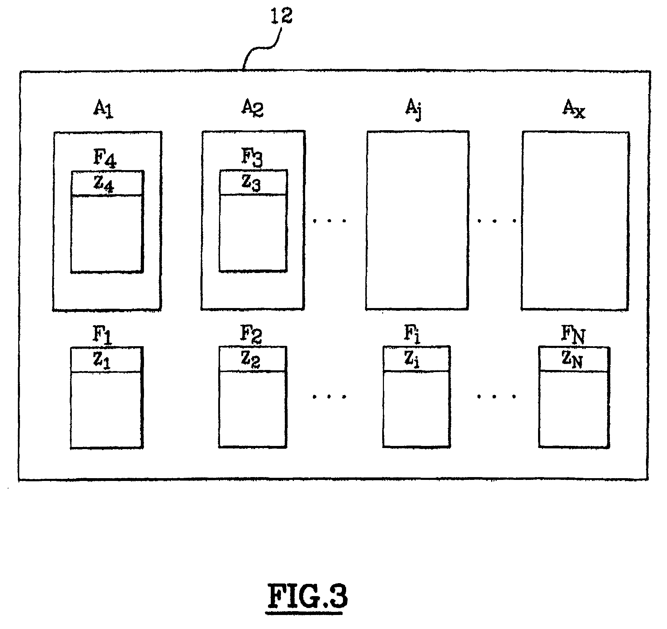

La figure 3 donne un autre exemple de répartition des fichiers Fi et des applications Aj dans ladite mémoire 12 de données. Contrairement au cas de la figure 2, la figure 3 montre qu'un fichier Fi peut être contenu dans une application Aj. Néanmoins, comme on le verra plus loin, le dispositif selon la présente invention s'applique tout aussi bien à une répartition telle que présentée dans la figure 2 qu'à une répartition telle que présentée dans la figure 3.

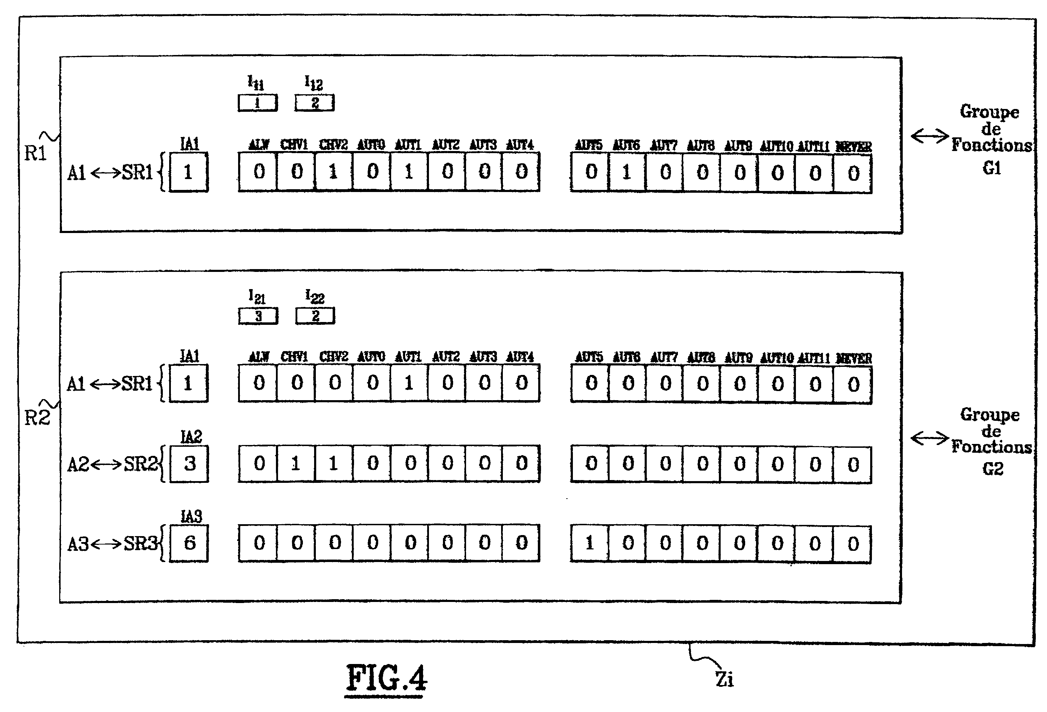

Chacun des fichiers Fi contient des informations confidentielles accessibles en lecture, écriture, recherche, sélection..., des configurations de conditions d'accès auxdites informations étant associées à M groupes de fonctions Gk (k = 1, ..., M) contenant une ou plusieurs des fonctions précitées. Chaque fichier Fi contient également une zone d'information Zi qui est divisée en M régions Rk comprenant lesdites configurations associées à chaque groupe Gk. Ainsi, relativement à l'exemple présenté à la figure 4, la zone Zi contient deux régions R1 et R2 associées respectivement aux groupes de fonctions G1 et G2. Suivant le nombre de groupes de fonctions voulu, la zone Zi est divisée en autant de zones Rk. Ainsi, si on le souhaite, on peut avoir M groupes Gk (k = 1, ..., M) ne contenant chacun qu'une unique fonction et auxquels sont associés respectivement M régions Rk contenant les configurations nécessaires de conditions d'accès associées auxdites M fonctions. Il n'y a aucune limitation dans le nombre de groupes pouvant être formés. Chaque région Rk contient en outre une information Ik1 correspondant à un nombre y d'applications Al (l = 1,..., y) pouvant utiliser un groupe de fonctions Gk en vue d'accéder à des informations du fichier Fi. Ainsi, sur la figure 4, l'information I11 de la région R1 montre qu'une seule application A1 peut utiliser le groupe G1 tandis que l'information I21 indique que trois applications A1, A2 et A3 peuvent utiliser le groupe G2. En pratique, une carte, à cause de sa taille mémoire, ne peut pas comporter une infinité d'applications, aussi on prendra un unique octet pour la définition de l'information Ik1. Le dispositif selon l'invention permet ainsi l'accès à des informations d'un même fichier par de multiples applications et autorise en conséquence le partage d'informations.

Comme on vient de le voir précédemment, le dispositif selon la présente invention permet d'avoir des configurations de conditions d'accès relatives à M groupes de fonctions Gk, chaque groupe de fonctions permettant à y applications Al (l = 1, ..., y) d'accéder à un même ensemble d'informations. Cependant, pour sécuriser ce partage d'informations, il est important de ne pas avoir les mêmes configurations de conditions d'accès pour lesdites applications Al utilisant un même groupe de fonctions Gk. C'est ainsi que dans chaque région Rk, l'information Ik1 détermine également un nombre y de sous-régions SRl associées respectivement à chacune desdites applications Al et contenant chacune une configuration de conditions d'accès indiquant les conditions à vérifier par chaque application Al associée en vue d'utiliser un groupe de fonctions Gk. En se référant à la figure 4, la région R1 contient une sous-région SR1 contenant une unique configuration relative au groupe G1. Ladite configuration indique que l'application A1 correspondante doit vérifier les conditions d'accès CHV2/AUT1/AUT6 pour utiliser les fonctions du groupe G1. De même, l'information I21 indique que la région R2 contient trois sous-régions SR1, SR2 et SR3 contenant chacune une configuration relative au groupe de fonctions G2. Lesdites configurations indiquent que les applications A1, A2 et A3 doivent vérifier respectivement les conditions d'accès AUT1, CHV1/CHV2 et AUT5 pour accéder aux informations dudit fichier Fi en utilisant le groupe de fonctions G2.

Ainsi, grâce au dispositif selon la présente invention, une configuration de conditions d'accès est associée à chacune des applications Al ce qui leur permet d'accéder de façon indépendante et sécuritaire à une même information.

Dans le système présenté, il est également nécessaire de pouvoir définir l'identité d'une application Al. Aussi, le dispositif selon la présente invention prévoit que chaque sous-région SRl contient une information IAl (l = 1, ..., y) indiquant l'identité de l'application Al associée à ladite région, cette identité pouvant être par exemple un numéro ou un nom d'application. En se référant à la figure 4, on peut voir que dans les sous-régions SR1, SR2 et SR3 de la région R2, la valeur de l'information IA1 est un, l'application A1 ayant comme identité le numéro un, tandis que les valeurs des informations IA2 et IA3 sont respectivement trois et six, les applications A2 et A3 ayant comme identités respectives les numéros trois et six.

Dans le cas où un fichier Fi est contenu dans une application Aj, comme sur la figure 3, d'après la description précédente, on comprend que le dispositif selon la présente invention permet également d'obtenir une sécurisation des informations propres à une application Aj tout en permettant le partage d'informations contenues dans ladite application. On notera que, dans ce cas là, une des applications Al associées à chaque région Rk est ladite application Aj. Dans tous les cas, la valeur de Ik1 est toujours supérieure ou égale à un.

Enfin, si on veut augmenter la sécurité des informations, on peut par exemple demander de vérifier les conditions d'accès CHV1/CHV2/AUTO/AUT1 pour accéder à une information. Il est par suite important de pouvoir définir un grand nombre configurations de conditions d'accès.

Aussi, chaque région Rk contient une information Ik2 indiquant le nombre d'octets attribués pour la définition des configurations des conditions d'accès de chaque sous-régions SRl, chaque configuration étant constituée par un ensemble de bits de sélection, chaque bit de sélection, dans chaque sous-région SRl, étant associé à une condition d'accès. Ainsi, en se référant à la figure 4, l'information I12 de la région R1 indique que deux octets sont nécessaires pour la définition de la configuration de la sous-région SR1, les conditions d'accès à vérifier étant CHV2/AUT1/AUT6. L'information I22 de la région R2, quant à elle, indique que deux octets sont également nécessaires pour la définition des configurations de conditions d'accès des sous-régions SR1, SR2 et SR3 et que les conditions d'accès à vérifier respectivement par les applications A1, A2 et A3 sont AUT1, CHV1/CHV2 et AUT5. On notera que, selon ce que l'on choisit, on peut avoir les valeurs des bits de sélection, associés aux conditions d'accès à vérifier, égales à un ou à zéro. Sur la figure 4, elles sont égales à un. En pratique, le nombre de bits de sélection associés aux conditions d'accès ne dépassera pas vingt quatre, aussi on prendra la valeur de Ik2 inférieure ou égale à trois et supérieure ou égale à un.

On notera que, dans le cas où une application Aj contient des fichiers Fi, pour tous les fichiers Fi de l'application Aj dont les informations sont non partagées, la valeur des informations Ik1 de chacune des régions Rk est soit égale à un, dans ce cas, l'unique application Al pouvant accéder à des informations est ladite application Aj; soit, la valeur des informations Ik1 de chacune des régions Rk est différente de un, différentes sous-régions SRl associées à différentes applications Al étant alors toutefois définies. Dans ce cas, le bit de sélection, de chaque sous-région SRl honnis celle relative à ladite application Aj, associé à une condition d'accès appelée NEVER est positionné en conséquence. On interdit ainsi aux applications Al, associées auxdites sous-régions SRl précitées, l'accès auxdites informations non partagées de l'application Aj.

Ainsi, le dispositif selon l'invention permet d'obtenir un grand nombre de configurations de conditions d'accès et une plus grande souplesse dans la gestion de la sécurité et par suite ledit dispositif permet d'avoir, si on le souhaite, une plus grande sécurité du traitement des informations.

On notera que le dispositif selon la présente invention s'applique aussi à une carte mono-application.

## Revendications

1. Dispositif à circuit intégré contenant, d'une part, une zone mémoire qui comprend N fichiers Fi (i = 1,..., N) contenant chacun une zone d'information Zi, et, d'autre part, x applications Aj (j = 1,..., x), **caractérisé en ce que** ladite zone d'information de chaque fichier Fi contient M régions Rk (k = 1,..., M) comprenant des configurations de conditions d'accès à des informations dudit fichier Fi, lesdites configurations étant associées respectivement à M groupes de fonctions Gk, chaque région Rk contenant en outre une information Ik1 correspondant à un nombre y d'applications Al (l = 1,..., y) pouvant utiliser un groupe de fonctions Gk en vue d'accéder à des informations dudit fichier Fi.

2. Dispositif selon la revendication 1, **caractérisé en ce que** dans chaque région Rk, l'information Ik1 défini également un nombre y de sous-régions SR1 associées respectivement à chacune desdites applications A1 et contenant chacune une configuration de conditions d'accès indiquant les conditions à vérifier par chaque application A1 associée en vue d'utiliser un groupe de fonctions Gk.

3. Dispositif selon l'une des revendications précédentes, **caractérisé en ce que** chaque sous-région SR1 contient une information IA1 (1 = 1, ..., y) indiquant l'identité de l'application A1 associée.

4. Dispositif selon l'une des revendications précédentes, **caractérisé en ce que** chaque région Rk contient une information Ik2 indiquant le nombre d'octets attribués pour la définition des configurations de conditions d'accès de chaque sous-régions SRI.

5. Dispositif selon l'une des revendications précédentes, **caractérisé en ce que** chaque configuration de conditions d'accès est constituée par un ensemble de bits de sélection, chaque bit de sélection, dans chaque sous-région SR1, étant associé à une condition d'accès.

6. Dispositif selon l'une des revendications précédentes, **caractérisé en ce que** la valeur de l'information Ikl est définie sur un octet.

7. Dispositif selon l'une des revendications précédentes, **caractérisé en ce que** la valeur de l'information Ik1 est supérieure ou égale à 1.

8. Dispositif selon l'une des revendications précédentes, **caractérisé en ce que** la valeur de l'information Ik2 est supérieure ou égale à 1.

9. Dispositif selon la revendication 7, **caractérisé en ce que** la valeur de l'information Ik2 est inférieure ou égale à 3.

10. Dispositif selon l'une des revendications précédentes, **caractérisé en ce qu'**un fichier Fi peut être contenu dans une application Aj.

## Patentansprüche

1. Vorrichtung mit einem integrierten Schaltkreis, welche einerseits einen Speicherbereich mit N Dateien Fi (i = 1,..., N) enthält, wovon jede einen Informationsbereich Zi besitzt, und anderseits x Anwendungen Aj (j = 1,..., x), **dadurch gekennzeichnet, dass** der Informationsbereich jeder Datei Fi M Bereiche Rk (k = 1,..., M) umfasst, welche Konfigurationen von Zugriffsbedingungen auf Informationen der besagten Datei Fi enthält, wobei die besagten Konfigurationen mit je einer von M Funktionsgruppen Gk verbunden sind und jeder Bereich Rk zusätzlich eine Information Ik1 enthält, die einer Anzahl y von Anwendungen Al (l = 1,..., y) entspricht, welche eine Funktionsgruppe Gk verwenden können, um auf Informationen der besagten Datei Fi zuzugreifen.

2. Vorrichtung nach Anspruch 1, **dadurch gekennzeichnet, dass** in jedem Bereich Rk die Information Ik1 gleichzeitig eine Anzahl y von Unterbereichen SRl definiert, die mit je einer der besagten Anwendungen Al verbunden sind und je eine Konfiguration von Zugriffsbedingungen enthalten, welche Konfiguration die Bedingungen angibt, die durch jede Anwendung Al geprüft werden müssen, um eine Funktionsgruppe Gk verwenden zu können.

3. Vorrichtung nach einem der obigen Ansprüche, **dadurch gekennzeichnet, dass** jeder Unterbereich SR1 eine Information IAl (l = 1,..., y) enthält, welche die Identität der damit verbundenen Anwendung A1 angibt.

4. Vorrichtung nach einem der obigen Ansprüche, **dadurch gekennzeichnet, dass** jeder Bereich Rk eine Information Ik2 enthält, welche die Anzahl der Bytes angibt, die zur Definition der Zugriffsbedingungs-Konfigurationen auf jeden der Unterbereiche SR1 zugeteilt sind.

5. Vorrichtung nach einem der obigen Ansprüche, **dadurch gekennzeichnet, dass** jede Konfiguration von Zugriffsbedingungen aus einer Anzahl Selektionsbits besteht, wobei jedes Selektionsbit, in jedem Unterbereich SR1, mit einer Zugriffsbedingung verknüpft ist.

6. Vorrichtung nach einem der obigen Ansprüche, **dadurch gekennzeichnet, dass** der Wert der Information Ik1 in einem Byte definiert ist.

7. Vorrichtung nach einem der obigen Ansprüche, **dadurch gekennzeichnet, dass** der Wert der Information Ik1 grösser als oder gleich 1 ist.

8. Vorrichtung nach einem der obigen Ansprüche, **dadurch gekennzeichnet, dass** der Wert der Information Ik2 grösser als oder gleich 1 ist.

9. Vorrichtung nach Anspruch 7, **dadurch gekennzeichnet, dass** der Wert der Information Ik2 kleiner als oder gleich 3 ist.

10. Vorrichtung nach einem der obigen Ansprüche, **dadurch gekennzeichnet, dass** eine Datei Fi in einer Anwendung Aj enthalten sein kann.

## Claims

1. Integrated circuit device containing firstly a memory area which comprises N files Fi (i = 1,..., N) each containing an information area Zi, and, secondly, x applications Aj (j = 1,..., x), **characterized in that** said information area of each file Fi contains M regions Rk (k = 1,..., M) comprising configurations for the conditions of access to information in said file Fi, said configurations being associated respectively with M groups of functions Gk, each region Rk containing in addition information Ik1 corresponding to a number y of applications Al (l = 1,..., y) which can use a group of functions Gk in order to access the information of said file Fi.

2. Device according to claim 1, **characterized in that** in each region Rk, the information Ik1 also defines a number y of sub-regions SRl associated respectively with each of said applications Al and each containing an access condition configuration indicating the conditions to be met by each associated application Al in order to use a group of functions Gk.

3. Device according to one of the previous claims, **characterized in that** each sub-region SRl contains information IAl (l = l, ..., y) indicating the identity of the associated application Al.

4. Device according to one of the previous claims, **characterized in that** each region Rk contains information Ik2 indicating the number of bytes allocated for the definition of the access condition configurations for each sub-region SRl.

5. Device according to one of the previous claims, **characterized in that** each access condition configuration consists of a set of selection bits, each selection bit, in each sub-region SRI, being associated with one access condition.

6. Device according to one of the previous claims, **characterized in that** the value of the information Ik1 is defined on one byte.

7. Device according to one of the previous claims, **characterized in that** the value of the information Ik1 is greater than or equal to 1.

8. Device according to one of the previous claims, **characterized in that** the value of the information Ik2 is greater than or equal to 1.

9. Device according to claim 7, **characterized in that** the value of the information Ik2 is less than or equal to 3.

10. Device according to one of the previous claims, **characterized in that** a file Fi can be contained in an application Aj.
